# EUROPEAN PATENT APPLICATION

(11) **EP 4 528 479 A1**
(43) Date of publication of application: **26.03.2025**
(21) Application number: 23928304.7
(22) Date of filing: 28.09.2023
(51) Int. Cl.: G06F 8/38

(54) **ROUNDED DISPLAY METHOD AND APPARATUS FOR DISPLAY SCREEN, AND DEVICE, INTELLIGENT AUTOMOBILE CABIN AND VEHICLE**

(30) Priority: 20.03.2023 CN 202310279771
(71) Applicant: Huizhou Desay SV Automotive Co., Ltd., Huizhou, Guangdong 516006 (CN)
(72) Inventor: YAN, Yutan, Huizhou, Guangdong 516006 (CN); DAI, Rui, Huizhou, Guangdong 516006 (CN); WU, Mianyao, Huizhou, Guangdong 516006 (CN); CAO, Fei, Huizhou, Guangdong 516006 (CN); ZHOU, Kun, Huizhou, Guangdong 516006 (CN)
(74) Representative: Biallo, Dario
(86) International application number: PCT/CN2023/122445
(87) International publication number: WO 2024/192999

(57) **Abstract**

Provided are a method and apparatus for displaying rounded corners on a display screen, a device, an automobile intelligent cabin and a vehicle. The method includes: acquiring a user interface image material with rounded corners; performing a display rendering process on the user interface image material and displaying the user interface image material on a display window according to a user interface display algorithm of an open graphics library; and performing hardware layer allocation on the display window through a display driver to display the user interface image material on the display screen.

## Description

This application claims priority to Chinese Patent Application No. 202310279771.8 filed with the China National Intellectual Property Administration (CNIPA) on Mar. 20, 2023, the disclosure of which is incorporated herein by reference in its entirety.

### TECHNICAL FIELD

Embodiments of the present application relate to the technical field of vehicles, for example, a method and apparatus for displaying rounded corners on a display screen, a device, an automobile intelligent cabin and a vehicle.

### BACKGROUND

With the rapid development of China's auto industry and the improvement of people's living standards, the number of cars owned by residents' families increases rapidly, and cars gradually become one of the indispensable means of transportation in people's lives.

A display screen of an automobile intelligent cabin is generally designed as a square when subjected to an open mold design. A square visible area does not look beautiful enough, and the user experience is relatively poor. To achieve better user experience, replacing the square display screen with a display screen with rounded corners may be selected in a later period, but the replacement of the display screen has a relatively high cost; another method is that rounded corners on a display screen are displayed in a later period of developing the display screen through a mechanical design method, but the method is low in efficiency, relatively poor in flexibility and relatively high in cost.

### SUMMARY

The present application provides a method and apparatus for displaying rounded corners on a display screen, a device, an automobile intelligent cabin and a vehicle, thereby solving the problem that a mechanical design method in the related art is low in efficiency, relatively poor in flexibility and relatively high in cost.

According to an aspect of the present application, a method for displaying rounded corners on a display screen is provided. The method includes the steps described below.

A user interface image material is acquired, where the user interface image material is in a shape of a rounded corner.

A display rendering process is performed on the user interface image material and the user interface image material is displayed on a display window according to a user interface display algorithm of an open graphics library.

Hardware layer allocation is performed on the display window through display driving to enable the user interface image material to be displayed on the display screen.

According to another aspect of the present application, an apparatus for displaying rounded corners on a display screen is provided. The apparatus includes an acquisition module, a rendering module and a display module.

The acquisition module is configured to acquire a user interface image material, where the user interface image material is in a shape of a rounded corner.

The rendering module is configured to perform a display rendering process on the user interface image material and display the user interface image material on a display window according to a user interface display algorithm of an open graphics library.

The display module is configured to perform hardware layer allocation on the display window through display driving to enable the user interface image material to be displayed on the display screen.

According to another aspect of the present application, an electronic device is provided. The electronic device includes at least one processor and a memory communicatively connected to the at least one processor.

The memory stores a computer program executable by the at least one processor, and the computer program is executed by the at least one processor to cause the at least one processor to perform the method for displaying rounded corners on a display screen according to any embodiment of the present application.

According to another aspect of the present application, a computer-readable storage medium is provided. The computer-readable storage medium stores a computer instruction, where the computer program, when executed by a processor, implements the method for displaying rounded corners on a display screen according to any embodiment of the present application.

According to another aspect of the present application, an automobile intelligent cabin is provided. The automobile intelligent cabin includes the electronic device according to the embodiment of the present application.

According to another aspect of the present application, a vehicle is provided. The automobile intelligent cabin according to the embodiment of the present application is disposed in the vehicle.

In the technical solution of the embodiment of the present application, the user interface image material is acquired, where the user interface image material is in the shape of the rounded corner; the display rendering process is performed on the user interface image material and the user interface image material is displayed on the display window according to the user interface display algorithm of the open graphics library; and the hardware layer allocation is performed on the display window through the display driving to enable the user interface image material to be displayed on the display screen, thereby solving the problem that an existing mechanical design method is low in efficiency, relatively poor in flexibility and relatively high in cost and achieving effects of reducing a cost of using the display screen, improving production efficiency and facilitating the promotion of use.

### BRIEF DESCRIPTION OF DRAWINGS

FIG. 1 is a flowchart of a method for displaying rounded corners on a display screen according to embodiment one of the present application.
FIG. 2 is a schematic diagram illustrating a comparison between display effects on a display screen according to embodiment one of the present application.
FIG. 3 is a schematic diagram of a user interface image material according to embodiment one of the present application.
FIG. 4 is a flowchart of a method for displaying rounded corners on a display screen according to embodiment two of the present application.
FIG. 5 is a flowchart illustrating the implementation of a display rendering process in a method for displaying rounded corners on a display screen according to embodiment two of the present application.
FIG. 6 is a layout diagram of a display window according to embodiment two of the present application.
FIG. 7 is a flowchart illustrating the implementation of a display rendering process in a method for displaying rounded corners on a display screen according to embodiment one of the present application.
FIG. 8 is a structure diagram of an apparatus for displaying rounded corners on a display screen according to embodiment three of the present application.
FIG. 9 is a structure diagram of an electronic device performing a method for displaying rounded corners on a display screen according to an embodiment of the present application.
FIG. 10 is a structure diagram of an automobile intelligent cabin according to embodiment five of the present application.
FIG. 11 is a structure diagram of a vehicle according to embodiment six of the present application.

### DETAILED DESCRIPTION

As used herein, the term "include" and variations thereof are intended to be inclusive, that is, "including, but not limited to". The term "based on" is "at least partially based on", and the term "according to" is "at least partially according to". The term "one embodiment" means "at least one embodiment"; the term "another embodiment" means "at least one another embodiment"; and the term "some embodiments" means "at least some embodiments". Related definitions of other terms are given in the description hereinafter.

The terms "first", "second" and the like in the description, claims and preceding drawings of the present application are used for distinguishing between similar objects and are not necessarily used for describing a particular order or sequence. It is to be understood that the data used in this manner is interchangeable where appropriate so that embodiments of the present application described herein can also be implemented in a sequence not illustrated or described herein. Additionally, terms "including" and "having" as well as any variations thereof are intended to encompass a non-exclusive inclusion. For example, a process, method, system, product or device that includes a series of steps or units not only includes the expressly listed steps or units but may also include other steps or units that are not expressly listed or are inherent to such a process, method, product or device.

References to modifications of "one" or "a plurality" mentioned in the present application are intended to be illustrative and not limiting; those skilled in the art should understand that "one" or "a plurality" should be understood as "one or more" unless clearly expressed in the context.

The names of messages or information exchanged between apparatuses in embodiments of the present application are illustrative and not to limit the scope of the messages or information.

### Embodiment one

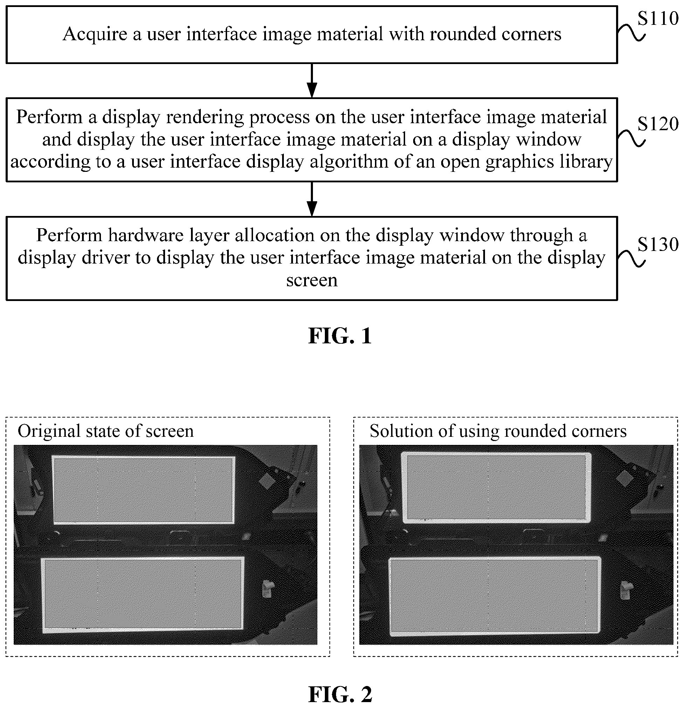

FIG. 1 is a flowchart of a method for displaying rounded corners on a display screen according to embodiment one of the present application. The method may be applicable to the case where rounded corners are displayed on a display screen of an automobile intelligent cabin. The method may be performed by an apparatus for displaying rounded corners on the display screen. The apparatus may be implemented by software and/or hardware and is generally integrated into an electronic device. In this embodiment, the electronic device may be a control device of the automobile intelligent cabin.

As shown in FIG. 1, the method for displaying rounded corners on a display screen according to embodiment one of the present application includes the steps described below.

In S110, a user interface image material is acquired, where the user interface image material has one or more rounded corners.

The user interface image material may be an image material with rounded corners provided by a user interface designer. For example, the user interface image material may be a boot animation material with rounded corners or may be a background material with rounded corners and adapted to a specification of a display screen.

In this embodiment, a manner of acquiring the user interface image material is not specifically limited. A feasible manner may be as follows: a user image material with rounded corners is selected from a user interface (UI) material library. The UI material library may include a material with rounded corners provided by the UI designer.

In S120, according to a user interface display algorithm of an open graphics library, a display rendering process is performed on the user interface image material and the user interface image material is then displayed on a display window.

The display window may be a display window on a display screen of an automobile intelligent cabin.

In this embodiment, the user interface image material can be fast displayed according to an OpenGL two-dimensional (2D) UI display algorithm.

The display rendering process can be performed on the user interface image material into the display window by an OpenGL ES programming interface, EGL programming interface, a QNX Screen programming interface of a Quick Unix system graphics framework and a code main loop function of the user interface display algorithm. For a specific process, reference may be made to embodiment two. Details are not described here.

In S 130, hardware layer allocation is performed on the display window through a display driver to display the user interface image material on the display screen.

The display screen may be the display screen of the automobile intelligent cabin. The display screen may include a meter display screen and a central control display screen. The display screen is square or rectangular. A specification and a type of the display screen are not limited here.

In this embodiment, hardware layers can be allocated by the display driver to implement the bonding of the user interface image material to the display screen of the automobile intelligent cabin so that the user interface image material does not depend on other display contents on the display screen and does not interfere with other display contents on the display screen.

When the hardware layer allocation is performed on the display window where the user interface image material is located, a hardware layer allocation strategy in the display driver can be used.

In the method for displaying rounded corners on a display screen according to embodiment one of the present application, the user interface image material is acquired first, where the user interface image material has rounded corners; the display rendering process is then performed on the user interface image material and the user interface image material is displayed on the display window according to the user interface display algorithm of the open graphics library; and the hardware layer allocation is finally performed on the display window through the display driver to display the user interface image material on the display screen. In the above method, displaying the rounded corners on the display screen by software can achieve a relatively soft visual effect, does not need the cutting of an original shape and a size of the display screen and is easy to implement, thereby reducing a cost of using the display screen, improving production efficiency and facilitating the promotion of use.

FIG. 2 is a schematic diagram illustrating a comparison between display effects of a display screen according to embodiment one of the present application. As shown in FIG. 2, an original displayed state of the display screen is shown on a left side of FIG. 2 where a rectangle is displayed; a displayed state of the display screen after the method for displaying rounded corners on a display screen according to the embodiment of the present application is used is shown on a right side of FIG. 2 where the rounded corners are displayed.

The user interface image material has one or more rounded corners and a fully transparent intermediate region, a color of the rounded corners is the same as a color of edges of the display screen, and a resolution of the user interface image material matches with an actual resolution of the display screen.

The user interface image material meets the conditions described below.
1. The intermediate region is fully transparent.
2. The corners are rounded, and the color is close to that of the edges of the display screen.
3. The resolution matches with the actual resolution of the display screen.

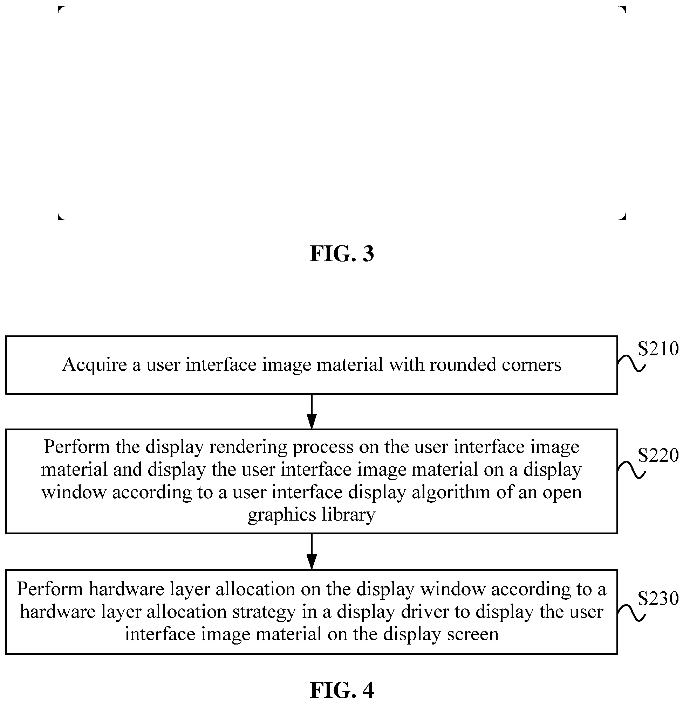

FIG. 3 is a schematic diagram of a user interface image material according to embodiment one of the present application. As shown in FIG. 3, four corners of the user interface image material are rounded corners.

### Embodiment two

FIG. 4 is a flowchart of a method for displaying rounded corners on a display screen according to embodiment two of the present application. This embodiment two is described on the basis of the preceding embodiment. In this embodiment, performing the display rendering process on the user interface image material and displaying the user interface image material on the display window according to the user interface display algorithm of the open graphics library is described. For the content not detailed in this embodiment, reference may be made to embodiment one.

As shown in FIG. 4, the method for displaying rounded corners on a display screen according to embodiment two of the present application includes the steps described below.

In S210, a user interface image material is acquired, where the user interface image material has one or more rounded corners.

In S220, the display rendering process is performed on the user interface image material and the user interface image material is displayed on a display window according to a user interface display algorithm of an open graphics library.

Performing the display rendering process on the user interface image material and displaying the user interface image material on the display window according to the user interface display algorithm of the open graphics library may include the steps described below.

In S2201, a display driver interface of a graphics processing system, a programming interface of the open graphics library, and an EGL programming interface of the open graphics library are initialized.

The programming interface of the open graphics library, that is, an OpenGL ES programming interface, is initialized. An intermediate interface layer between an OpenGL ES rendering interface and a local window system is the EGL programming interface. The display driver interface of the graphics processing system is QNX Screen programming interface.

In S2202, whether the display rendering process is enabled is determined after a code main loop function of the user interface display algorithm is entered.

In S2203, if the display rendering process is enabled, the display rendering process is performed on the user interface image material according to the programming interface of the open graphics library and the EGL programming interface.

In S2204, whether a previous display rendering state is enabled is determined.

In S2205, if the previous display rendering state is not enabled, the display window is opened, and the rendered user interface image material is presented on the display window through the display driver interface of the graphics processing system.

Performing the display rendering process on the user interface image material and displaying the user interface image material on the display window further includes: if it is determined that the display rendering process is not enabled, whether the previous display rendering state is enabled is determined; if it is determined that the previous display rendering state is not enabled, the code main loop function is reentered after preset time is delayed; if it is determined that the previous display rendering state is enabled, a content in the display window is cleared, the display window is closed, and the code main loop function is reentered.

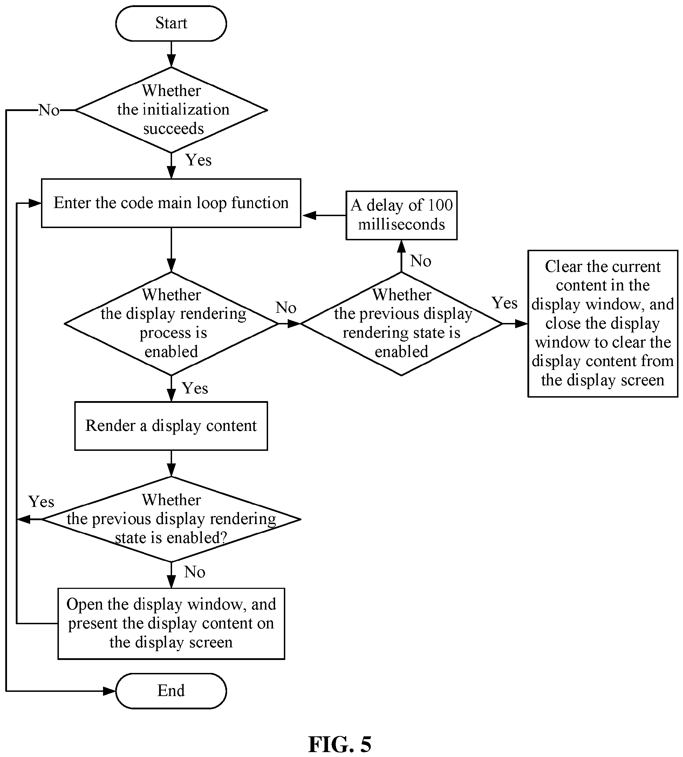

FIG. 5 is a flowchart illustrating the implementation of display rendering process in a method for displaying rounded corners on a display screen according to embodiment two of the present application. As shown in FIG. 5, the display rendering process includes the steps described below.

In step 1, whether the initialization succeeds is determined.

Whether the initialization succeeds is determined, that is, whether the display driver interface of the graphics processing system, the programming interface of the open graphics library, and the EGL programming interface of the open graphics library are initialized successfully is determined.

If the initialization succeeds, step 2 is performed. If the initialization fails, the flow ends.

In step 2, the code main loop function is entered.

the phrase "entering the code main loop function" means to enter the code main loop function of the user interface display algorithm.

In step 3, whether the display rendering process is enabled is determined.

If the display rendering process is enabled, step 4.1 is performed. If the display rendering process is not enabled, step 4.2 is performed.

In step 4.1, a display content is rendered.

The phrase "rendering the display content" means to perform the display rendering process on the user interface image material.

In step 4.2, whether the previous display rendering state is enabled is determined.

If the previous display rendering state is not enabled, the flow returns to step 2 after a delay of 100 milliseconds, and step 2 continues to be performed. If the previous display rendering state is enabled, step 5 is performed.

In step 5, the content in the display window is cleared.

The phrase "clearing the content in the display window" means to clear the user interface image material in the display window.

After step 4.1 is performed, step 6 is performed.

In step 6, whether the previous display rendering state is enabled is determined.

If the previous display rendering state is enabled, the flow returns to step 2. If the previous display rendering state is not enabled, step 7 is performed.

In step 7, the display window is opened, and the display content is presented on the display screen.

Presenting the display content on the display screen may be understood as presenting the user interface image material in the display window.

In S230, hardware layer allocation is performed on the display window according to a hardware layer allocation strategy in a display driver to display the user interface image material on the display screen.

The hardware layer allocation strategy includes the cases described below.

If only one software display window exists in each hardware layer among different hardware layers, the display window is set in an uppermost hardware layer that supports transparent display among the different hardware layers.

If multiple software display windows exist in one hardware layer among different hardware layers and the multiple software display windows have different requirements for transparency, the display window is independently disposed in a new hardware layer that is located above the different hardware layers and supports transparent display.

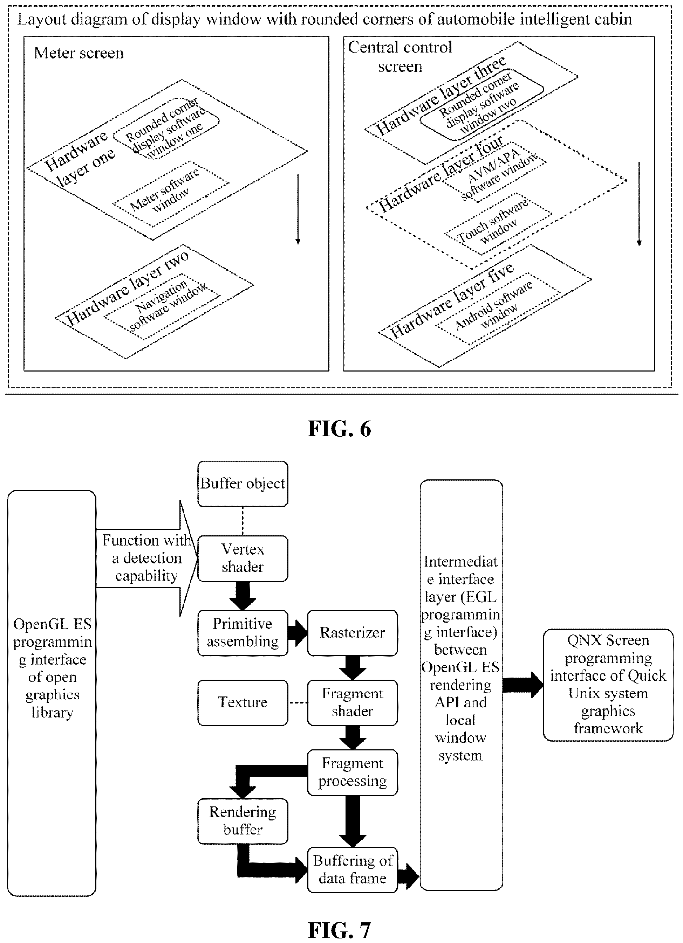

For example, as shown in FIG. 6, FIG. 6 is a layout diagram of a display window according to embodiment two of the present application. On a meter display screen, a meter software window and a rounded corner display software window 1 are disposed in a hardware layer one, where the rounded corner display software window 1 supports the transparent display, and the hardware layer one is a hardware layer at an uppermost layer among multiple hardware layers of the meter display screen. A navigation software window is disposed in a hardware layer two. On a central control display screen, a rounded corner display software window 2 is independently disposed in a hardware layer three, where the rounded corner display software window 2 supports the transparent display, and the hardware layer three is a hardware layer at an uppermost layer among the multiple hardware layers of the central control screen. An around view monitor (AVM) & automated parking assist (APA) software window and a touch software window are disposed in a hardware layer four, where the AVM & APA software window has a different requirement for transparency. An Android software window is disposed in a hardware layer five. The hardware layer five is located at a lowermost layer.

A step of performing the display rendering process on the user interface image material and displaying the user interface image material on the display window according to the user interface display algorithm of the open graphics library and a step of performing the hardware layer allocation on the display window through the display driver are described in the method for displaying rounded corners on a display screen according to embodiment two of the present application. The method has high flexibility and can be efficiently adapted to a requirement for a change in user interface design. The method has high usage efficiency and can quickly meet a requirement for project delivery. The method has a relatively low usage cost and can improve the competitiveness of a product. Through the method, a desired display style can be iterated at any time as software upgrades.

A specific step of performing the display rendering process on the user interface image material may include: the programming interface of the open graphics library is called to parse out vertex coordinate data and pixel color data of the user interface image material by a vertex shader, a rasterizer and a fragment shader, and the EGL programming interface is called to write the vertex coordinate data and the pixel color data to a rendering buffer for buffering.

FIG. 7 is a flowchart illustrating the implementation of the display rendering process in a method for displaying rounded corners on a display screen according to an embodiment of the present application. As shown in FIG. 7, the flow includes: the OpenGL ES interface of the open graphics library is called to draw information such as the vertex coordinate information and the pixel color of the image material that are parsed out by the vertex shader and the fragment shader and write final display content data to a rendering buffer for storing the display content created by EGL, and finally, a display driving screen api interface of a QNX system is called to present the display content on the display screen.

### Embodiment three

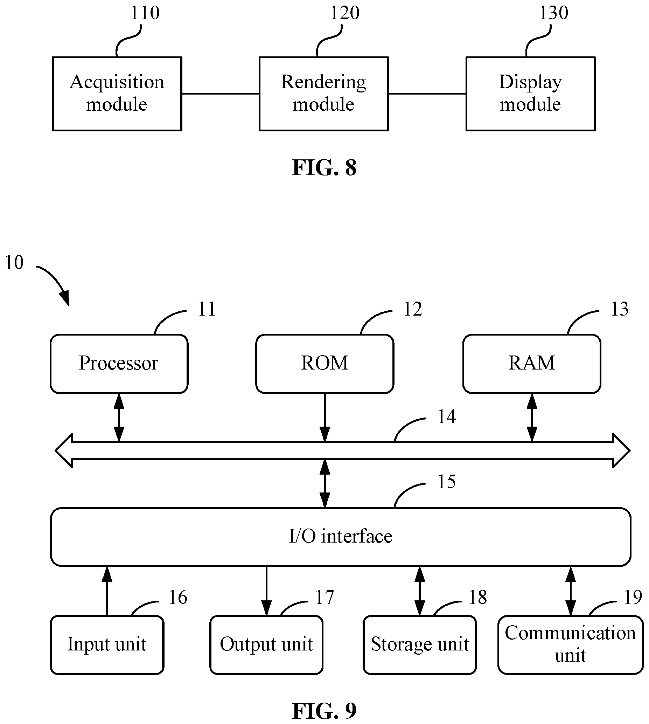

FIG. 8 is a structure diagram of an apparatus for displaying rounded corners on a display screen according to embodiment three of the present application. The apparatus may be applicable to the case where rounded corners are displayed on a display screen of an automobile intelligent cabin. The apparatus may be implemented by software and/or hardware and is generally integrated into an electronic device. The electronic device may be a control device of the automobile intelligent cabin.

As shown in FIG. 8, the apparatus includes an acquisition module 110, a rendering module 120 and a display module 130.

The acquisition module 110 is configured to acquire a user interface image material, where the user interface image material has one or more rounded corners. The rendering module 120 is configured to, according to a user interface display algorithm of an open graphics library, perform a display rendering process on the user interface image material and display the user interface image material on a display window. The display module 130 is configured to perform hardware layer allocation on the display window through a display driver to display the user interface image material on the display screen.

In the embodiment, the apparatus first acquires the user interface image material through the acquisition module 110, where the user interface image material has one or more the rounded corners; and then the apparatus performs the display rendering process on the user interface image material and displays the user interface image material on the display window according to the user interface display algorithm of the open graphics library through the rendering module 120; the apparatus finally performs, through the display module 130, the hardware layer allocation on the display window through the display driver to display the user interface image material on the display screen.

The apparatus for displaying rounded corners on a display screen according to this embodiment can achieve a relatively soft visual effect, does not need the cutting of an original shape and a size of the display screen and is easy to implement, thereby reducing a cost of using the display screen, improving production efficiency and facilitating the promotion of use.

The user interface image material includes one or more rounded corners and a fully transparent intermediate region, a color of the rounded corners is the same as a color of edges of the display screen, and a resolution of the user interface image material matches with an actual resolution of the display screen.

The rendering module 120 is configured to perform the operations described below. A display driver interface of a graphics processing system, a programming interface of the open graphics library, and an EGL programming interface of the open graphics library are initialized. Whether the display rendering process is enabled is determined after a code main loop function of the user interface display algorithm is entered. If the display rendering process is enabled, the display rendering process is performed on the user interface image material according to the programming interface of the open graphics library and the EGL programming interface. Whether a previous display rendering state is enabled is determined. If the previous display rendering state is not enabled, the display window is opened, and the rendered user interface image material is presented on the display window by the display driver interface of the graphics processing system.

On the basis of the preceding embodiment, the rendering module 120 is further configured to perform the operations described below. If it is determined that the display rendering process is not enabled, whether the previous display rendering state is enabled is determined. If the previous display rendering state is not enabled, the code main loop function is reentered after preset time is delayed. If the previous display rendering state is enabled, a content in the display window is cleared, the display window is closed, and the code main loop function is reentered.

The display module 130 is configured to perform the operation described below. The hardware layer allocation is performed on the display window according to a hardware layer allocation strategy in the display driver.

According to the above technical solution, the hardware layer allocation strategy includes the cases described below.

If only one software display window exists in each hardware layer among different hardware layers, the display window is set in an uppermost hardware layer that supports transparent display among the plurality of hardware layers.

If multiple software display windows exist in one hardware layer among different hardware layers and the multiple software display windows have different requirements for transparency, the display window is independently set in a new hardware layer that is located above the multiple hardware layers and supports transparent display.

The preceding apparatus for displaying rounded corners on a display screen may execute the method for displaying rounded corners on a display screen provided in any embodiment of the present application, and has functional modules and effects corresponding to the executed method.

### Embodiment four

FIG. 9 is a structure diagram of an electronic device 10 that can be used for implementing the embodiment of the present application. The electronic device aims to represent a control device of an automobile intelligent cabin. Herein the shown components, the connections and relationships between these components, and the functions of these components are illustrative only and are not intended to limit the implementation of the present application as described and/or claimed herein.

As shown in FIG. 9, the electronic device 10 includes at least one processor 11 and a memory (such as a read-only memory (ROM) 12 and a random-access memory (RAM) 13) communicatively connected to the at least one processor 11. The memory stores a computer program executable by the at least one processor, and the processor 11 may perform various types of appropriate operations and processing according to a computer program stored in the ROM 12 or a computer program loaded from a storage unit 18 to the RAM 13. Various programs and data required for the operation of the electronic device 10 may also be stored in the RAM 13. The processor 11, the ROM 12 and the RAM 13 are connected to each other through a bus 14. An input/output (I/O) interface 15 is also connected to the bus 14.

Multiple components in the electronic device 10 are connected to the I/O interface 15. The multiple components include an input unit 16 such as a keyboard or a mouse, an output unit 17 such as various types of display or speaker, the storage unit 18 such as a magnetic disk or an optical disk, and a communication unit 19 such as a network card, a modem, or a wireless communication transceiver. The communication unit 19 allows the electronic device 10 to exchange information/data with other devices over a computer network such as the Internet and/or various telecommunications networks.

The processor 11 may be various general-purpose and/or special-purpose processing components having processing and computing capabilities. Examples of the processor 11 include, but are not limited to, a central processing unit (CPU), a graphics processing unit (GPU), a special-purpose artificial intelligence (AI) computing chip, a processor executing machine learning models and algorithms, a digital signal processor (DSP), and any appropriate processor, controller and microcontroller. The processor 11 performs the various methods and processing described above, such as the method for displaying rounded corners on a display screen.

In some examples, the method for displaying rounded corners on a display screen may be implemented as computer programs tangibly contained in a computer-readable storage medium such as the storage unit 18. In some embodiments, part or all of computer programs may be loaded and/or installed onto the electronic device 10 via the ROM 12 and/or the communication unit 19. When the computer programs are loaded to the RAM 13 and executed by the at least one processor 11, one or more steps of the preceding method for displaying rounded corners on a display screen may be performed. Alternatively, in other embodiments, the processor 11 may be configured, in any other suitable manner (for example, by means of firmware), to perform the method for displaying rounded corners on a display screen.

The various embodiments of the systems and techniques described herein may be implemented in digital electronic circuitry, integrated circuitry, a field-programmable gate array (FPGA), an application-specific integrated circuit (ASIC), application specific standard parts (ASSP), a system on a chip (SoC), a complex programmable logic device (CPLD), computer hardware, firmware, software and/or a combination thereof. The various embodiments may include implementations in one or more computer programs. The one or more computer programs are executable and/or interpretable on a programmable system including at least one programmable processor. The programmable processor may be a special-purpose or general-purpose programmable processor for receiving data and instructions from a memory system, at least one input apparatus, and at least one output apparatus and transmitting data and instructions to the memory system, the at least one input apparatus, and the at least one output apparatus.

Computer programs for implementation of the methods of the present application may be written in one programming language or any combination of multiple programming languages. These computer programs may be provided for a processor of a general-purpose computer, a special-purpose computer or another programmable data processing apparatus such that the computer programs, when executed by the processor, cause functions/operations specified in the flowcharts and/or block diagrams to be implemented. These computer programs may be executed entirely on a machine, partly on a machine, as a stand-alone software package partly on a machine and partly on a remote machine, or entirely on a remote machine or a server.

In the context of the present application, the computer-readable storage medium may be a tangible medium including or storing a computer program that is used by or used in conjunction with an instruction execution system, apparatus, or device. The computer-readable storage medium may include, but is not limited to, an electronic, magnetic, optical, electromagnetic, infrared or semiconductor system, apparatus or device, or any suitable combination thereof. Alternatively, the computer-readable storage medium may be a machine-readable signal medium. More specific examples of the machine-readable storage medium may include an electrical connection based on one or more wires, a portable computer disk, a hard disk, an RAM, an ROM, an erasable programmable read-only memory (EPROM), a flash memory, an optical fiber, a portable compact disk read-only memory (CD-ROM), an optical memory device, a magnetic memory device, or any suitable combination thereof.

In order that interaction with a user is provided, the systems and techniques described herein may be implemented on the electronic device. The electronic device has a display device (for example, a cathode-ray tube (CRT) or a liquid-crystal display (LCD) monitor) for displaying information to the user; and a keyboard and a pointing device (for example, a mouse or a trackball) through which the user can provide input for the electronic device. Other types of apparatuses may also be used for providing interaction with a user. For example, feedback provided for the user may be sensory feedback in any form (for example, visual feedback, auditory feedback or tactile feedback); and input from the user may be received in any form (including acoustic input, voice input or tactile input).

The systems and techniques described herein may be implemented in a computing system including a back-end component (for example, a data server), a computing system including a middleware component (for example, an application server), a computing system including a front-end component (for example, a user computer having a graphical user interface or a web browser through which a user can interact with embodiments of the systems and techniques described herein), or a computing system including any combination of such back-end, middleware or front-end components. Components of a system may be interconnected by any form or medium of digital data communication (for example, a communication network). Examples of the communication network include a local area network (LAN), a wide area network (WAN), a blockchain network and the Internet.

The computing system may include clients and servers. A client and a server are generally remote from each other and typically interact through a communication network. The relationship between the client and the server arises by virtue of computer programs running on respective computers and having a client-server relationship to each other. The server may be a cloud server, also referred to as a cloud computing server or a cloud host. As a host product in a cloud computing service system, the server solves the defects of difficult management and weak service scalability in conventional physical host and virtual private server (VPS) services.

### Embodiment five

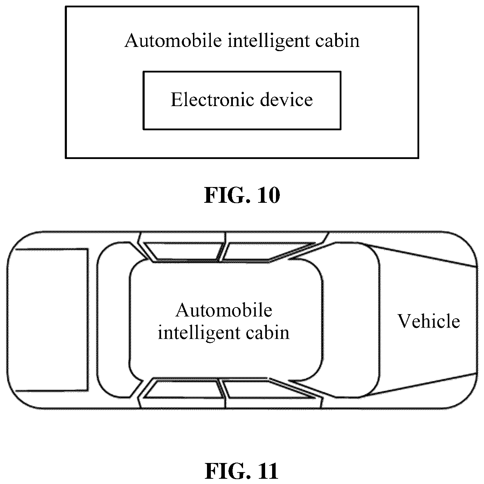

FIG. 10 is a structure diagram of an automobile intelligent cabin according to embodiment five of the present application. As shown in FIG. 10, the automobile intelligent cabin includes the electronic device according to embodiment four of the present application. The automobile intelligent cabin may execute the method for displaying rounded corners on a display screen provided in any embodiment of the present application, and has functional modules and effects corresponding to the executed method.

### Embodiment six

FIG. 11 is a structure diagram of a vehicle according to embodiment six of the present application. As shown in FIG. 11, the automobile intelligent cabin according to embodiment five of the present application is disposed in the vehicle. The vehicle may execute the method for displaying rounded corners on a display screen provided in any embodiment of the present application, and has functional modules and effects corresponding to the executed method.

It is to be understood that various forms of the preceding flows may be used with steps reordered, added or deleted. For example, the steps described in the present application may be executed in parallel, in sequence or in a different order as long as the desired results of the technical solutions in the present application are achieved. The execution sequence of these steps is not limited herein.

## Claims

1. A method for displaying rounded corners on a display screen, comprising:
acquiring a user interface image material with the rounded corners;
according to a user interface display algorithm of an open graphics library, performing a display rendering process on the user interface image material and display the user interface image material on a display window; and
performing hardware layer allocation on the display window through a display driver to display the user interface image material on the display screen.

2. The method according to claim 1, wherein the user interface image material comprises the rounded corners and a fully transparent intermediate region, a color of the rounded corners is the same as a color of edges of the display screen, and a resolution of the user interface image material matches with an actual resolution of the display screen.

3. The method according to claim 1 or 2, wherein according to the user interface display algorithm of the open graphics library, performing the display rendering process on the user interface image material and display the user interface image material on the display window comprises:
initializing a display driver interface of a graphics processing system, a programming interface of the open graphics library, and an EGL programming interface of the open graphics library;
determining whether the display rendering process is enabled after a code main loop function of the user interface display algorithm is entered;
in response to the display rendering process being enabled, performing the display rendering process on the user interface image material according to the programming interface of the open graphics library and the EGL programming interface; and determining whether a previous display rendering state is enabled;
in response to the previous display rendering state being not enabled, opening the display window, and presenting the user interface image material into the display window through the display driver interface of the graphics processing system.

4. The method according to claim 3, further comprising:
in response to the display rendering process being not enabled, determining whether the previous display rendering state is enabled;
in response to the previous display rendering state being not enabled, reentering the code main loop function after preset time is delayed;
in response to the previous display rendering state being enabled, clearing a content in the display window, closing the display window, and reentering the code main loop function.

5. The method according to claim 1 or 2, wherein performing the hardware layer allocation on the display window through the display driver comprises:
performing the hardware layer allocation on the display window according to a hardware layer allocation strategy in the display driver.

6. The method according to claim 5, wherein the hardware layer allocation strategy comprises:
in response to only one software display window existing in each hardware layer among a plurality of hardware layers, setting the display window in an uppermost hardware layer that supports transparent display among the plurality of hardware layers; or
in response to a plurality of software display windows existing in one hardware layer among a plurality of hardware layers and having different requirements for transparency, independently setting the display window in a new hardware layer that is located above the plurality of hardware layers and supports transparent display.

7. An apparatus for displaying rounded corners on a display screen, comprising:
an acquisition module configured to acquire a user interface image material with the rounded corners;
a rendering module configured to, according to a user interface display algorithm of an open graphics library, perform a display rendering process on the user interface image material and display the user interface image material on a display window; and
a display module configured to perform hardware layer allocation on the display window through a display driver to display the user interface image material on the display screen.

8. An electronic device, comprising:
at least one processor; and
a memory communicatively connected to the at least one processor;
wherein the memory stores a computer program executable by the at least one processor, and the computer program is executed by the at least one processor to cause the at least one processor to perform the method for displaying rounded corners on a display screen according to any one of claims 1 to 6.

9. A computer-readable storage medium storing a computer instruction, wherein the computer instruction, when executed by a processor, implements the method for displaying rounded corners on a display screen according to any one of claims 1 to 6.

10. An automobile intelligent cabin, comprising the electronic device according to claim 8.

11. A vehicle where the automobile intelligent cabin according to claim 10 is disposed.
